(19) Europäisches Patentamt
European Patent Office
Office européen des brevets

(11) Publication number: 0 264 649 B1

(12) **EUROPEAN PATENT SPECIFICATION**

(45) Date of publication of the patent specification: **19.12.90**

(51) Int. Cl.[5]: **C08F 126/02**, C08F 2/32, C08F 8/12

(21) Application number: **87113924.2**

(22) Date of filing: **23.09.87**

(54) **Manufacture of high molecular weight poly(N-vinylamides) and poly(vinylamines) by inverse emulsion polymerization.**

(30) Priority: **01.10.86 US 914087**

(43) Date of publication of application: **27.04.88 Bulletin 88/17**

(45) Publication of the grant of the patent: **19.12.90 Bulletin 90/51**

(84) Designated Contracting States: **BE DE FR GB IT NL**

(56) References cited:
**GB-A- 1 088 109**
**US-A- 3 696 085**

(73) Proprietor: **AIR PRODUCTS AND CHEMICALS, INC., P.O. Box 538, Allentown, Pennsylvania 18105(US)**

(72) Inventor: **Lai, Ta-Wang, 106 West Chestnut St., Macungie, PA 18062(US)**
Inventor: **Vijayendran, Bheema Rao, 4702 Parkview Drive North, Emmaus, PA 18049(US)**

(74) Representative: **Kador & Partner, Corneliusstrasse 15, D-8000 München 5(DE)**

EP 0 264 649 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

TECHNICAL FIELD

The invention relates to the inverse emulsion polymerization of N-vinylamides, especially N-vinylformamide and N-vinylacetamide, to produce high molecular weight polymers which may subsequently be hydrolyzed to afford poly(vinylamine).

BACKGROUND OF THE INVENTION

Water soluble polymers such as poly(N-vinylamides), frequently require high molecular weight to develop satisfactory properties for high performance applications. Low to medium molecular weight poly(N-vinylformamide) and poly(N-vinylacetamide) have been prepared by conventional solution polymerization in water and alcohols using oil-soluble and water-soluble initiators. However, poly(N-vinylamides) of high molecular weight are difficult to produce by conventional solution polymerization in that the polymer product obtained under useful conditions is a gel which is difficult to handle. In addition, problems with high solution viscosity and poor heat transfer make such synthesis impractical on a commercial scale.

Nonetheless, it was believed by the present inventors that the applications performance of poly(vinylamides) and poly(vinylamines) could be enhanced by the preparation and use of homopolymers of very high molecular weight ($>10^6$).

U.S. 4,500,437 discloses acrylamide copolymers and terpolymers containing N-vinylformamide and N-vinylacetamide prepared by inverse emulsion polymerization in Examples 67-70 with the polymers of Examples 68 and 70 having a molecular weight below 100,000; i.e $<10^5$. Example 20 shows the preparation of poly(vinylformamide) by solution polymerization.

U.S. 4,421,602 discloses linear basic polymers containing from 90 to 10 mole% of copolymerized vinylamine units and from 10 to 90 mole% of copolymerized N-vinylformamide units. This patent teaches that the polymers can be prepared by solution polymerization in water, a water-soluble solvent or a mixture of water and a water-soluble solvent and actually shows such solution polymerization in the examples. It is suggested that the polymerization can also be carried out as a water-in-oil emulsion polymerization in a water-immiscible solvent, but there are no examples of such polymerization.

U.S. 4,018,826 discloses the preparation of poly(vinylamine) salts of mineral acids by polymerizing vinylacetamide with a free radical polymerization catalyst, and hydrolyzing the poly(vinylacetamide) to the desired amine salts by contacting the poly(vinylacetamide) with an aqueous solution of the corresponding mineral acid. Poly(vinylamine) product of about 3,000 to about 700,000 molecular weight (4,000 to about 1,000,000 for the salt product) is suggested.

U.S. 3,558,581 discloses homo- and copolymers of N-vinyl-N-methylamine by hydrolysis of the corresponding polymers of N-vinyl-N-methylformamide with mineral acids.

U.S. 3,597,314 discloses a water-soluble polymer consisting essentially of units derived from N-vinyl-N-methylformamide having 60-100% of the formic acid radicals of the polymer split off by acid hydrolysis. There is no disclosure regarding inverse emulsion polymerization.

GB 2,152,929 is directed to a process for producing N-substituted formamides for use in producing N-vinylformamide by thermally decomposing N-(alpha-alkoxyethyl)formamide in the gas phase. It is suggested that the N-vinylformamide can be bulk polymerized, solution polymerized using an aqueous solution or an organic solution, or emulsion polymerized singly or together with a monomer used conventionally for producing water-soluble polymers suitable for making flocculants, in the presence of a polymerization initiator of azo compounds. The thus obtained poly(vinylformamide) is hydrolyzed under acidicic conditions to obtain a cationic polymer of poly(vinylamines).

D. J. Dawson, et al., "Poly(vinylamine hydrochloride). Synthesis and Utilization for the Preparation of Water-Soluble Polymeric Dyes," J. Am. Chem. Soc., 98:19, 5996 (1976) discloses the preparation of N-vinylacetamide and its polymerization in solution followed by acid hydrolysis to poly(N-vinylamine hydrochloride).

Representative of the numerous prior art references relating to water-in-oil emulsion polymerization of water-soluble monomers are the following patents: U.S. 2 982 749; 3 278 506; 3 284 393; 3 957 739; 3 975 341; 4 078 133; and 4 312 969.

Perhaps most importantly R.H. Summerville et al., "Synthesis of N-vinyl Acetamide and Preparation of Some Polymers and Copolymers," Polym. Reprints 24, 12 (1983) discloses that the inverse emulsion polymerization of N-vinylacetamide initiated by sodium persulfate in water and cyclohexane using Igepal surfactants was tried without success.

SUMMARY OF THE INVENTION

According to the present Invention very high molecular weight poly(N-vinylamides) can be prepared by an inverse emulsion polymerization process. The present invention provides an inverse homopolymer emulsion consisting essentially of 10–70 wt% of an aqueous solution containing 10–90 wt% of a homopolymer of an N-vinylamide of the formula

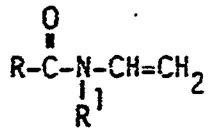

wherein R and $R^1$ represent hydrogen or a $C_1$–$C_4$ alkyl group colloidally dispersed in a hydrocarbon liquid which is a $C_5$–$C_{10}$ alkane and, in addition toluene and xylene when R = alkyl, the homopolymer being at least $10^6$ average molecular weight an the emulsion possessing a viscosity less than 10 (cps)mpas$^2$ at 15% solids, 60 rpm Brookfield (7.9 $sec^{-1}$) and 20°C.

The method for preparing the inverse or water-in-oil emulsion involves colloidally dispersing an aqueous solution containing 10–90 wt% water-soluble N-vinylamide of the above formula in the hydrocarbon liquid using 5–20 wt% based on aqueous solution of a surfactant having an HLB value from 4 to 9, the weight ratio of monomer-containing aqueous solution to hydrocarbon liquid being preferably in the range from 1:2 to 2:1, and polymerizing the monomer using an azo-type free radical initiator.

The resultant very high molecular weight polymer emulsion has a low viscosity ranging from 2 to less than 10 (cps) at mPas$^2$ 15% solids, 60 rpm Brookfield and 20°C, thus elimimating problems of solution viscosity which arise when the polymer is prepared by a solution polymerization process. In addition the low viscosity homopolymer emulsion is easy to handle and can be used directly.

One such use of the vinylamide homopolymer emulsions is in the preparation of poly(vinylamines) of at least a $10^6$ average molecular weight by acid or base catalyzed hydrolysis of the homopolymer preferably as the emulsion. The use of the mineral acid in the hydrolysis step or in acidifying the base hydrolysis product provides the poly(vinylamine) as the salt of such acid.

The very high molecular weight, water-soluble poly(N-vinylamides) and the derived poly(vinylamines) have applications in the fields of water treatment, enhanced oil recovery and papermaking. For example, the derived poly(vinylamines) can be used as an important component in oil field chemical compositions such as drilling mud compositions cements for drilling holes completion fluids and acidized fracturing fluids. Solution rheology (thickening efficiency and viscosity response to shear rates in the range of 1 to 1000 $sec^{-1}$) of the poly(vinylamines) at a 0.5 to 1% concentration in low level salt solutions e.g. 2% KCl solution is important in oil field chemical compositions for many applications. The very high molecular weight of the polymers affords better rheology.

In enhanced oil recovery (EOR) applications the poly(vinylamines) of the invention provide compositions having improved viscosity stability at 90°C and improved viscosity retention in sea water. Most commercially available polymers fail under both these conditions. Hydrolyzed polyacrylamides fail in sea water solution at elevated temperatures due to precipitation of the polymer in the presence of calcium ions in the sea water. Xanthan® polymer is insensitive to calcium ions. However, at high temperatures the polymer chains uncoil and lose their viscosifying efficiency.

In general such EOR compositions would comprise sea water containing about 1000 to 2000 ppm of the poly(vinylamine) and have a (10 to 20 cps) 10–2 mPas$^2$ Brookfield viscosity at 7.9 $sec^{-1}$ (60 rpm) and 90°C. Very high molecular weight vinylamine polymers according to the invention seem to show improved stability at high temperature and calcium salinity – a set of conditions useful in high temperature EOR viscosifying applications.

When used in acidized fracturing fluids the poly(vinylamines) of the invention result in improved viscosity stability in concentrated hydrochloric acid solution at 70°C. Most commercial cellulosic polymers currently used in this application fail due to the breakdown of the polymer backbone under these conditions. Such fluids comprise about 0.2 to 2% poly(vinylamine) and 5 to 28% aqueous hydrochloric acid and have a FANN 35 viscosity of 10 to 100 (cps) mPas$^2$ at 300 rpm, 510 $sec^{-1}$ and $R_1B_1$ sensor.

Thus there is also provided a process for well stimulation by fracture acidizing with an aqueous acidic solution wherein the acidic solution is injected into the well to contact a formation under pressure sufficient to fracture the formation the acidic solution containing as a viscosifier a vinylamine homopolymer having a molecular weight greater than $10^6$.

A further embodiment of the present invention is a drilling mud composition with good rheology. Such drilling mud compositions comprise 0.1 to 1 wt% poly(vinylamine) 0 to 10 wt% salt and 0.5 to 5 wt% clay dispersed in water.

Also provided by the invention are completion fluids exhibiting high viscosity in saturated brine solution as well as high temperature viscosity stability. A typical completion fluid comprises a saturated salt solution containing 0.2 to 2 wt% poly(vinylamine).

The present invention also provides an increase in retention drainage rate and flocculation in a papermaking process comprising the deposition of a pulp stock to form a nonwoven sheet by adding to the pulp stock poly(vinylamines) according to the invention.

BRIEF DESCRIPTION OF THE DRAWING

The sole Figure is a graphic representation of the effect of high molecular weight poly(vinylamine) and poly(N-vinylacetamide) according to the invention and other prior art polymers in the flocculation of kaolinite clay.

DETAILED DESCRIPTION OF THE INVENTION

Poly(N-vinylamides) of molecular weight at least $10^6$, preferably $3 \times 10^6$ to $15 \times 10^6$) are prepared via an inverse emulsion polymerization process by reacting the following composition under an inert atmosphere:

1. water-soluble N-vinylamide monomer,
2. water,
3. hydrocarbon liquid,
4. water-in-oil emulsifying agent, and
5. a nitrogen-containing free radical initiator.

The aqueous solution comprising the first two components contains 10 to 90 wt%, preferably 50 to 70 wt%, of a water-soluble N-vinylamide of the formula

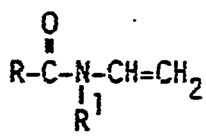

where R and $R^1$ represent hydrogen or an alkyl group having 1-4, preferably 1-2, carbon atoms, especially a methyl group. The weight ratio of monomer-containing aqueous solution to hydrocarbon liquid may be varied widely depending upon the monomer used, but preferably is about 1:2 to 2:1.

The suitable hydrocarbon liquids for use in the invention are immiscible with water and do not significantly dissolve the monomers in the presence of water. Such hydrocarbon liquids are exemplified by acyclic and cyclic $C_5$-$C_{10}$ alkanes such as hexane, octane, decane, and decahydronaphthalene (decalin), and, in addition, for N-vinylacetamides and the aromatic hydrocarbons toluene and xylene. Contemplated as the functional equivalent of toluene and xylene when R is an alkyl group in the monomer formula are ethylbenzene and tetrahydronaphthalene (tetralin). The preferred hydrocarbon liquids are the $C_5$-$C_{10}$ acyclic alkanes.

The stabilizing system comprises suitable emulsifying agents, or surfactants, having a hydrophilic-lipophilic balance (HLB) value from 4 to 9, preferably 4 to 7.5, and include sorbitan fatty acid esters such as sorbitan monostearate, oleate, laurate or palmitate; polyoxyethylene- sorbitan fatty acid esters, i.e. reaction products of one mole of the aforementioned sorbitan fatty acid esters with from 4 to 40 moles of ethylene oxide; polyoxyethylene sorbitol esters of fatty acids; and mixtures thereof. The preferable quantity of surfactant is 5 to 20 wt% based on the monomer-containing aqueous solution.

The free radical initiator should be one of the azo compounds well known in the polymerization art such as 2,2'-azobis(isobutyronitrile); 2,2'-azobis(2-amidinopropane) hydrochloride; 4,4'-azobis(4'-cyanopentanoic acid) and the like. Persulfates and hydrogen peroxide have been found not to be suitable in practicing the invention. Redox catalyst systems may be used comprising the azo initiators with a reducing agent typically used in the art. The amount of free radical initiator can be varied widely depending upon reaction temperatures, rate of polymerization, degree of polymerization to be obtained, but preferably is in the range of 0.001 to 0.5 mole% of the monomer used.

The polymerization is usually carried out under an inert atmosphere, preferably under nitrogen. The reaction temperature is preferably in the range of 40-60°C. A high temperature, i.e. >60°C, may cause side reactions unfavorable to the polymer such as crosslinking. A lower temperature may be impractical because of long reaction times.

The homopolymer product can be isolated from the emulsion by adding a flocculating agent and filtering. The precipitated product is then washed and dried. Generally, a polar organic solvent which is a good solvent for the surfactant but a poor solvent for the polymer, e.g. acetone, is used to aggregate the polymer. The precipitated polymer is filtered and washed to remove the surfactant. The dried and purified polymer of very high molecular weight is in the form of a fine powder and is water soluble.

The vinylamide homopolymer products are hydrolyzed to vinylamine homopolymers of at least $10^6$ average molecular weight in the presence of acids or bases. More desirably, vinylamine homopolymers of $1.8 \times 10^6$ to $9 \times 10^6$ molecular weight or more are obtained.

Suitable acids for the hydrolysis include mineral acids such as hydrochloric, hydrobromic, sulfuric, phosphoric and perchloric acid; and organic acids such as trifluoroacetic acids and methanesulfonic acid. be employed include alkali and alkaline earth hydroxides such as sodium hydroxide, potassium hydroxide, calcium hydroxide and barium hydroxide; and quaternary ammonium hydroxides such as tetramethyl ammonium hydroxide. The quantity of the acid or base required may vary widely, depending upon the degree of hydrolysis desired and reaction conditions. Approximately, 1 to 3 equivalents of the acid or base per equivalent of the polymer is preferred to achieve essentially complete hydrolysis.

The hydrolysis can be performed in various solvents, including water; liquid ammonia; alcohols such as methanol, ethanol, isopropanol, and t-butanol; amines such as methylamine, dimethylamine, ethylamine and the like; and hydroxy amines such as ethanolamine. However, it is much preferred to simply add the acid or base in water to the water-in-oil emulsion.

The temperature of the hydrolysis may range from 20 to 200°C depending upon the type of polymer and hydrolysis employed. Generally, hydrolysis proceeds more rapidly for poly(N-vinylformamide) than for poly(N-vinylacetamide). Thus, hydrolysis of poly(N-vinylformamide) can be carried on under milder conditions, i.e. at lower temperatures and shorter reaction times than for poly(N-vinylacetamide). The preferable temperature range of a base hydrolysis is 70 to 100°C which is lower than that of acid hydrolysis in the range of 110 to 200°C.

The hydrolyzed polymer products thus obtained comprise the repeating free amino-containing units of the formula

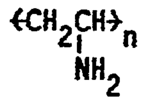

in the case of base hydrolysis, and amino-containing units of the formula

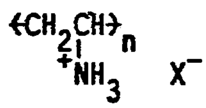

in the case of acid hydrolysis, where $X^-$ represents the anion corresponding to the acid employed in the hydrolysis.

Poly(vinylamine) is preferably isolated in the salt form to prevent adsorption of atmospheric carbon dioxide. The polymer salt is isolated by acidifying the hydrolysis mixture to cause the polymer to precipitate. The precipitated polymer generally is a gum, but a fibrous material can be obtained after redissolving, followed by reprecipitation in methanol.

The products of this invention are high molecular weight poly(N-vinylamides), especially poly(N-vinylformamide) of 3–15 × $10^6$ mol wt and poly(N-vinylacetamide) of 1.3–5 × $10^6$ mol wt, and the derived poly(vinylamine) and poly(vinylamine) salts. These polymeric materials are particularly useful as flocculants, retention agents, and thickeners in the areas of water treatment, enhanced oil recovery and papermaking. These polymers may also be used as corrosion inhibitors, photographic chemicals, surfactants, protein hardeners, ion exchange resins, and as ingredients in the preparation of drugs, food dyes, herbicides and pesticides.

EXAMPLE 1

This Example shows a preparation of a very high molecular weight poly(N-vinylformamide) by inverse emulsion polymerization.

Sorbitan monostearate (SPAN 60® surfactant HLB 4.7, 2.5 g) was dissolved in octane (90 g) and the resulting solution was transferred to a reaction kettle. The reactor was purged with nitrogen and kept in a nitrogen atmosphere throughout the polymerization. The N-vinylformamide solution (15 g in 30 g of water) was degassed and added to the reactor at the rate of 2.5 ml/min with vigorous agitation. (The N-vinylformamide was purified by vacuum distillation at 70°C, 1 torr, prior to use.) While the reaction mixture was heated to 50°C, 2,2′-azobis(2,4-dimethylpentanitrile) (Vazo® 52 initiator, 0.05 g) was charged. After 3 hours at 50°C with agitation, a stable polymeric emulsion was produced having a viscosity of 3 (cps)mPas[2] The solid polymer product was recovered by breaking the emulsion by the addition of acetone. The isolated N-vinylformamide homopolymer had a molecular weight of 6.7 × $10^6$ as measured by light scattering and a viscosity of 21000 (cps) mPas[2] as a 5% aqueous solution.

EXAMPLE 2

The vinylformamide homopolymer (10 g) of Example 1 was dissolved in water (990 g) and then mixed with 50% aqueous sodium hydroxide (11.3 g).

The resulting mixture was heated for 8 hours at 80°C under a nitrogen atmosphere. To the reaction mixture was added concentrated hydrochloric acid until the polymer precipitated. The acid solution was

decanted. The precipitated polymer was redissolved in water and reprecipitated with methanol. The vinylamine homopolymer hydrochloride salt had a viscosity of 400 (cps) mPas2 at 1% aqueous solution.

EXAMPLE 3

This Example shows the preparation of a very high molecular weight poly(N-vinylacetamide) by inverse emulsion polymerization.

The N-vinylacetamide was prepared according to the method taught in U.S. Patent 4 018 826. The N-vinylacetamide was purified as follows: The crude N-vinylacetamide (1 kg) was flash distilled at 70–74°C, 1 torr. Approximately two-thirds of the material was distilled to give a 70:30 N-vinylacetamide/acetamide mixture. This mixture (100 g) and toluene (600 g) were placed in a 1000 ml beaker and the resulting mixture was stirred well. The yellow toluene solution was decanted from insoluble solids which were washed twice with 50 g of fresh toluene. The toluene solutions were combined and washed with 25 g of brine. The yellow brine solution was discarded. The toluene solution was then extracted four times with 130 ml of water. The aqueous solution was back extracted with 25 ml of methylene chloride. The methylene chloride solution was discarded. The aqueous solution was saturated with sodium chloride and extracted four times with 330 ml methylene chloride. After removing the methylene chloride under reduced pressure, 42 g of pure N-vinylacetamide (60% recovery) was obtained.

A mixture of N-vinylacetamide (15 g), water (45 g), xylene (90 g), and SPAN 60® surfactant (4 g) was polymerized in the same manner as described in Example 1, using 2,2'-azobis(2-methylpropionitrile) AIBN (0.08 g) as an initiator. The N-vinylacetamide homopolymer was precipitated by addition of acetone, and had a molecular weight of $1.5 \times 10^6$, as determined by gel permeation chromatography.

EXAMPLE 4

The N-vinylacetamide homopolymer of Example 3 (10 g) was dissolved in water and mixed with concentrated hydrochloric acid (2 mole equivalents). The resulting mixture was heated to reflux (about 110°C) for 48 hours. To the reaction mixture was added concentrated hydrochloric acid until the polymer precipitated. The acid solution was decanted. The precipitated polymer was redissolved in water and reprecipitated with methanol yielding 8.8 g of product having a viscosity of 324 (cps)mPas2 as a 1% aqueous solution.

EXAMPLES 5–9

N-vinylformamide (NVF) was polymerized in the same manner as described in Example 1. The data regarding the polymerization recipes and the resulting emulsions are set forth in Tables 1 and 2, respectively.

TABLE 1

| EXAMPLE | NVF (g) | WATER (g) | HYDROCARBON (g) | SPAN® 60 (g) | VAZO® 52 (g) | ADDITIVE (g) |
|---|---|---|---|---|---|---|
| 5 | 15 | 30 | Octane 55 | 2.5 | 0.05 | — |
| 6 | 15 | 30 | Octane 55 | 2.5 | 0.05 | 0.25 Vinol® 125 |
| 7 | 15 | 10 | Octane 75 | 2.5 | 0.05 | — |
| 8 | 15 | 30 | Hexane 90 | 2.5 | 0.05 | — |
| 9 | 15 | 30 | Hexane 90 | 2.5 | 0.05 | 0.25 Poly(vinylamine) |

TABLE 2

| EXAMPLE | EMULSION VISCOSITY (cps) | HOMOPOLYMER MOLECULAR WEIGHT |
|---|---|---|
| 5 | 4 | $7 \times 10^6$ |
| 6 | 4 | $7 \times 10^6$ |
| 7 | 4 | $6 \times 10^6$ |
| 8 | 4 | $6 \times 10^6$ |
| 9 | 4 | $6 \times 10^6$ |

Comparative EXAMPLE 10

In this example the inverse emulsion polymerization of N-vinylformamide according to Example 1 was attempted using toluene, xylene and kerosene individually as the hydrocarbon liquid phase. In each instance a high molecular weight N-vinylformamide polymer was obtained, but the emulsions were unstable and broke.

Comparative EXAMPLE 11

This example shows the need to use an azo-type initiator. Following the procedure of Example 1 using sodium or ammonium persulfate as the initiator resulted in failure in that no polymer was obtained. This failure is believed due to a possible redox reaction occurring between the monomer and the persulfate.

Comparative EXAMPLE 12

In this example poly(N-vinylformamide) was prepared according to the solution polymerization procedure of Example 12 in U.S. Patent 4 421 602. The isolated polymer was deterned as having a molecular weight of $1.4 \times 10^5$ by aqueous gas phase chromatography (GPC).

Comparative EXAMPLE 13

A poly(N-vinylformamide) emulsion was prepared according to the procedure of Example 69 in U.S. Patent 4 500 437. The resultant polymer emulsion was paste-like and unstable. The isolated poly(N-vinylformamide) had a molecular weight of $5.1 \times 10^5$ as determined by aqueous GPC.

Comparative EXAMPLE 14

The polymerization of N-vinylformamide was performed according to the procedure of Example 20 in U.S. Patent 4 500 437. The product was a viscous liquid indicating a molecular weight of less than $5 \times 10^3$.

EXAMPLE 15

The effect of poly(vinylamine), poly(vinylamine hydrochloride) and poly(N-vinylacetamide) according to the invention in flocculation of kalonite clay was tested and compared to commercial polymers, namely, polyacrylamide, polyacrylic acid and Guar gum.

A 0.01% polymer solution (12.5 ml) was added to an equal volume of a stock kaolinite clay slurry (5.5 g in 200 ml of a 2% aqueous KCl solution) in a 25 ml stoppered graduated cylinder. The cylinder was inverted five times. The clay level was measured after 3, 6, 9, 15, 30, 45 and 60 minutes. Results are shown in Figure 1. It can be seen that the high molecular weight poly(vinylamine) has excellent flocculation activity. The rate of sedimentation and the compact nature of floc are of interest in water treatment applications.

EXAMPLE 16

This Example shows the application of a poly(vinylamine) according to the invention in enhanced oil recovery. Two vinylamine homopolymers and two commercially available polymers, namely xanthan and a hydrolyzed polyacrylamide, were evaluated at 1500 ppm in sea water using a low shear Brookfield viscosity at 7.9 $sec^{-1}$.

TABLE 3

Low Shear Rheology in Sea Water[a]

| Polymer | Conc (ppm) | Brookfield Viscosity ((cps)[b]) mPas[2] R.T. | 90°C |
|---|---|---|---|
| Vinylamine (7 MM) | 1500 | 16 | 13 |
| Vinylamine (0.6 MM) | 1500 | 6 | 2 |
| Xanthan®XC | 1500 | 50 | 4 |
| Hydrolyzed Polyacrylamide | 1500 | 15 | 3 |

[a] Sea Water = 3% NaCl + 0.3% $CaCl_2$; pH = 6
[b] Model LVF, 7.9 $sec^{-1}$

It can be seen from Table 3 that the vinylamine homopolymer of about $7 \times 10^6$ molecular weight outperformed the commercially available polymers as well as the lower molecular weight poly(vinylamine).

EXAMPLE 17

In this Example the very high and the low molecular weight vinylamine (VAm) homopolymers were compared with guar for use in a fracture acidizing composition. The polymer concentration was 0.5% and the viscosity was measured using a FANN 35 viscometer. $R_1B_1$ sensor at 510 sec $^{-1}$.

TABLE 4

| Fracture Acidizing | | | | | | |
|---|---|---|---|---|---|---|
| | Room Temperature | | | 70°C - 3HR | | |
| % HCl | VAm (0.6 MM) | VAm (7 MM) | Guar | VAm (0.6 MM) | VAm (7 MM) | Guar |
| 0 | 28 | 129 | 37 | 18 | 68 | 34 |
| 10 | 10 | 22 | 26 | 3 | 12.5 | 2 |
| 15 | 6 | 6.5 | 11 | 2 | 9 | 2 |

The 7 million molecular weight vinylamine homopolymer had the higher viscosity behavior compared to the lower molecular weight homopolymer and also outperformed the commercially available control, i.e. guar, at higher temperature.

EXAMPLE 18

In this Example the enhanced performance of a drilling mud containing a vinylamine homopolymer of the invention was demonstrated.

A typical drilling mud formulation can be prepared as follows:

Clay Dispersion A:

11.1 g Aqua Gel Gold Seal® Bentonite Clay
8 g Potassium chloride
400 g Water
Clay is dispersed to hydrate overnight.
Polymer Solution B:
2 g of polymer are dissolved in 400 g water, mixed for 2 to 4 hours and pH adjusted to 6.

Dispersion A (200 g) is added to polymer solution B (200 g) and mixed for 4 hours. Rheology measurements were made using a FANN-35 viscometer at 300 and 600 rpm using standard API procedure.

TABLE 5

| Polymer | Apparent Viscosity (cps) $mPas^2$ | Plastic Viscosity (cps) $mPas^2$ | Gel Strength 10 sec/10 min | Yield Point 1b/100 $ft^2$ |
|---|---|---|---|---|
| VAm (80 M) | 3.7 | 2.5 | 0 | 2.5 |
| VAm (0.6 MM) | 6.0 | 4.5 | 0 | 3.0 |
| VAm (7 MM) | 14.0 | 11.0 | 3/4 | 6.0 |
| Xanthan® | 8.8 | 5.5 | 3/4 | 6.5 |

Table 5 shows that the very high molecular weight vinylamine homopolymer had the best performance at room temperature.

EXAMPLE 19

The high molecular weight vinylamine homopolymer demonstrated a surprisingly high viscosity in saturated brine solutions. This property is important in completion fluids used in oil wells.

The saturated salt solution was prepared by mixing 1 g of a polymer into 100 g of saturated salt solution and measuring the viscosity.

TABLE 6

| Polymer | Viscosity in Saturated Salt Solution ((cps)) mPas[2] NaCl | $CaCl_2$ |
|---|---|---|
| VAm (0.6 MM) | 3 | 100 |
| VAm (7 MM) | 11.5 | 300 |
| Hercules® 250 HHR Hydroxyethylcellulose | 4 | 250 |

EXAMPLE 20

This Example demonstrates the use of the vinylamine homopolymer as a dry strength additive in paper making application.

Paper chromatography grade stock of uniform size was immersed in water, metered through squeeze rolls and weighed. Water pick-up was calculated and determined consistent from sheet to sheet. The weight of polymer required per unit water volume to impart 0.5% polymer pick-up on sheet weight (dry/dry) was determined.

The low molecular weight (80M) vinylamine homopolymer and polyvinyl alcohol were applied at 0.75%. The high molecular weight (7MM) vinylamine homopolymer which was an extremely high 3200 cps in viscosity was diluted to 0.188% solids and assumed to be 0.125%, the add-on level of the others. The polymers were adjusted to pH 4.5 prior to sheet saturation.

TABLE 7

| Polymer Saturant | Instron Tensile 1b/in | Mullen Burst $1b/in^2$ | Tear CMD |
|---|---|---|---|
| Blank | 11.5 | 0.6 | 71 |
| VAm (80 M) | 13.5 | 2.5 | 77 |
| VAm (7 MM)[a] | 14.5 | 3.1 | 89 |
| VINO® 107 PVOH[b] | 12.5 | 2.0 | 80 |

[a] 0.125% add-on compared to 0.5% for the others.

[b] Polyvinyl alcohol marketed by Air Products and Chemicals, Inc.

It can be seen that the very high molecular weight vinylamine homopolymer was an effective dry strength additive in papermaking at 1/4 the dosage compared to the low molecular weight vinylamine homopolymer.

EXAMPLE 21

This Example shows the retention characteristics of the vinylamine homopolymer in papermaking.

Immediately prior to hand sheet preparations, softwood and hardwood bleached kraft pulps were each suspended at 1.5% consistency in deionized water. The pulps were then blended 1:1 by weight and an amount equivalent to 30 g (oven dry basis) was utilized in preparing each set of hand sheets. Ten percent of anatase $TiO_2$ based on fiber weight was added followed by 5 minutes of stirring. (The $TiO_2$ was predispersed at 10% solids in deionized water). Sufficient pulp to form a 2.5 g hand sheet was removed and treated with polymer followed by 30 seconds of moderate stirring. The treated fiber suspension was then added to a Noble and Wood sheet mold containing sufficient deionized water to provide a forming consistency of 0.04%. Hand sheets formed from the fiber suspensions were pressed 5 minutes at 50 psig between blotter stock and then drum dried 7 minutes at (220°F) 130°C in contact with one blotter.

Following this procedure the polymers were added to the fiber suspension at 0.5% consistency at addition levels of 0, 0.01, 0.05, 0.1, 0.2 and 1% based on fiber. The pH was maintained at 5. Hand sheets prepared in the manner described were conditioned at 50% RH and 23°C (73°F) and tested for filler retention using TAPPI standard method.

TABLE 8

| Polymer | % $TiO_2$ Retention |
|---|---|
| VAm (7 MM) | 93.1 |
| VAm (80 MM) | 83.3 |
| Hercules® 834 Heterofloc<br>High Mol. Wt./High Charge Density, PAM | 85.6 |
| Allied Colloid DSR 1256<br>Low Mol. Wt./Low Charge Density, PAM | 54.0 |

It can be seen that the 7MM molecular weight poly(vinylamine) demonstrated a superior $TiO_2$ retention at 0.1–0.2% addition level to wood pulp.

STATEMENT OF INDUSTRIAL APPLICATION

The present invention provides very high molecular weight poly(N-vinylamides) by inverse emulsion polymerization and derived poly(vinylamines) having applications in water treatment, enhanced oil recovery and papermaking fields.

**Claims**

1. An inverse polymer emulsion consisting of 10 to 70 wt% of an aqueous solution containing 10 to 90 wt% of a homopolymer of an N-vinylamide of the formula

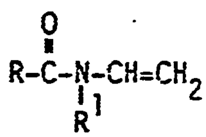

wherein R and $R^1$ represent hydrogen or a $C_1$–$C_4$ alkyl group, colloidally dispersed in a hydrocarbon liquid which is a $C_5$–$C_{10}$ alkane, or additionally toluene or xylene when R is alkyl, the homopolymer being at least $10^6$ average molecular weight and the emulsion having a Brookfield viscosity less than 10 (cps)$mPas^2$ at 60 rpm and 15% solids.

2. The inverse polymer emulsion of Claim 1 in which R is hydrogen or methyl and $R^1$ is hydrogen.

3. The inverse polymer emulsion of Claim 2 in which the hydrocarbon liquid is an acyclic $C_5$–$C_{10}$ alkane.

4. The inverse polymer emulsion of Claim 3 in which R is hydrogen.

5. The inverse polymer emulsion of Claim 4 in which the homopolymer is 3–15 × $10^6$ average molecular weight.

6. The inverse polymer emulsion of Claim 2 in which R is methyl.

7. The inverse polymer emulsion of Claim 3 in which R is methyl.

8. The inverse polymer emulsion of Claim 6 in which the homopolymer is 1.3–5 × $10^6$ average molecular weight.

9. The inverse polymer emulsion of Claim 8 in which the hydrocarbon liquid is xylene.

10. The inverse polymer emulsion of Claim 1 in which the Brookfield viscosity is 2 to less than 10 (cps)$mPas^2$.

11. A method for the preparation of a water-in-oil emulsion of a polymer derived from a water-soluble monomer by the inverse polymerization of an aqueous solution of the monomer colloidally dispersed in a hydrophobic liquid using a surfactant and a free radical initiator, characterized by polymerizing 10–90 wt%, based on aqueous solution, of a monomer of the formula

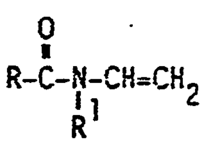

wherein R and $R^1$ represent hydrogen or a $C_1$–$C_4$ alkyl group, using 5–20 wt%, based on aqueous solution, of a surfactant having a hydrophilic-lipophilic balance value from 4 to 9, an azo-type free radical initiator and a hydrocarbon liquid which is a $C_5$-$C_{10}$ alkane, or also toluene or xylene when R is alkyl, the aqueous solution and the hydrocarbon liquid being in a weight ratio ranging from 1:2 to 2:1 and obtaining a water-in-oil emulsion of a homopolymer of at least $10^6$ average molecular weight, the emulsion having a Brookfield viscosity less than 10 (cps)$mPas^2$ at 60 rpm and 15% solids.

12. The method of Claim 11 in which R is hydrogen or methyl and $R^1$ is hydrogen.
13. The method of Claim 12 in which the hydrocarbon liquid is an acyclic $C_5$–$C_{10}$ alkane.
14. The method of Claim 13 in which R is hydrogen.
15. The method of Claim 14 in which the homopolymer is 3–15 × $10^6$ average molecular weight.
16. The method of Claim 12 in which R is methyl.
17. The method of Claim 13 in which R is methyl.
18. The method of Claim 16 in which the homopolymer is 1.3–5 × $10^6$ average molecular weight.
19. The method of Claim 18 in which the hydrocarbon liquid is xylene.
20. The method of Claim 11 in which the Brookfield viscosity is 2 to less than 10 (cps)mPas$^2$.

## Patentansprüche

1. Umkehrpolymeremulsion, die aus 10 bis 70 Gew.-% einer wässrigen Lösung besteht, die 10 bis 90 Gew.-% eines Homopolymers von N-Vinylamid der Formel

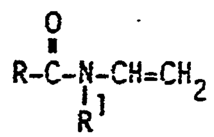

enthält, worin R und $R^1$ Wasserstoff oder eine $C_1$–$C_4$-Alkylgruppe darstellen, die kolloidal in eine Kohlenwasserstoffflüssigkeit dispergiert ist, die ein $C_5$–$C_{10}$-Alkan oder zusätzlich Toluol oder Xylol ist, wenn R eine Alkylgruppe ist, wobei das Homopolymer ein durchschnittliches Molekulargewicht von mindestens $10^6$ aufweist und die Emulsion bei 60 U/min und 15% Feststoffgehalt eine Brookfield-Viskosität von weniger als 10 (cps)mPas$^2$ aufweist.
2. Umkehrpolymeremulsion nach Anspruch 1, worin R Wasserstoff oder eine Methylgruppe und $R^1$ Wasserstoff sind.
3. Umkehrpolymeremulsion nach Anspruch 2, worin die Kohlenwasserstoffflüssigkeit ein acyclisches $C_5$–$C_{10}$-Alkan ist.
4. Umkehrpolymeremulsion nach Anspruch 3, worin R Wasserstoff ist.
5. Umkehrpolymeremulsion nach Anspruch 4, worin das Homopolymer ein durchschnittliches Molekulargewicht von 3–15 × $10^6$ aufweist.
6. Umkehrpolymeremulsion nach Anspruch 2, worin R eine Methylgruppe ist.
7. Umkehrpolymeremulsion nach Anspruch 3, worin R eine Methylgruppe ist.
8. Umkehrpolymeremulsion nach Anspruch 6, worin das Homopolymer ein durchschnittliches Molekulargewicht von 1,3–5 × $10^6$ aufweist.
9. Umkehrpolymeremulsion nach Anspruucch 8, worin die Kohlenwasserstoffflüssigkeit Xylol ist.
10. Umkehrpolymeremulsion nach Anspruch 1, worin die Brookfield-Viskosität 2 bis weniger als 10 (cps)mPas$^2$ beträgt.
11. Verfahren zur Herstellung einer Wasser-in-Öl-Emulsion eines Polymers, das von einem wasserlöslichen Monomer abgeleitet wird, durch Umkehrpolymerisation einer wässrigen Lösung des Monomers, das unter Verwendung eines Tensides und eines freien Radikalinitiators in einer hydrophoben Flüssigkeit kolloidal dispergiert ist, gekennzeichnet durch die Polymerisation von 10 bis 90 Gew.-%, bezogen auf die wässrige Lösung, eines Monomers der Formel

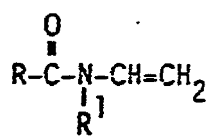

worin R und $R^1$ Wasserstoff oder eine $C_1$–$C_4$-Alkylgruppe darstellen, wobei, bezogen auf die wässrige Lösung 5–20 Gew.-% des Tensides mit einem hydrophilen/lipophilen Gleichgewichtswert von 4 bis 9, ein freier Radikalinitiator vom Azotyp und eine Kohlenwasserstoffflüssigkeit verwendet werden, die ein $C_5$–$C_{10}$-Alkan oder auch Toluol oder Xylol ist, wenn R eine Alkylgruppe ist, wobei die wässrige Lösung und die Kohlenwasserstoffflüssigkeit in einem Gewichtsverhältnis im Bereich von 1:2 bis 2:1 sind und eine Wasser-in-Öl-Emulsion des Homopolymers mit einem durchschnittlichen Molekulargewicht von mindestens $10^6$ erhalten wird, wobei diese Emulsion bei 60 U/min und 15% Feststoffen eine Brookfield-Viskosität von weniger als 10(cps)mPas$^2$ aufweist.
12. Verfahren nach Anspruch 11, worin R Wasserstoff oder eine Methlygruppe und $R^1$ Wasserstoff sind.
13. Verfahren nach Anspruch 12, worin die Kohlenwasserstoffflüssigkeit ein acyclisches $C_5$–$C_{10}$-Alkan ist.

14. Verfahren nach Anspruch 13, worin R Wasserstoff ist.

15. Verfahren nach Anspruch 14, worin das Homopolymer ein durchschnittliches Molekulargewicht von 3–15 × $10^6$ aufweist.

16. Verfahren nach Anspruch 12, worin R eine Methylgruppe ist.

17. Verfahren nach Anspruch 13, worin R eine Methylgruppe ist.

18. Verfahren nach Anspruch 16, worin das Homopolymer ein durchschnittliches Molekulargewicht von 1, 3–5 × $10^6$ aufweist.

19. Verfahren nach Anspruch 18, worin die Kohlenwasserstoffflüssigkeit Xylol ist.

20. Verfahren nach Anspruch 11, worin die Brookfield-Viskosität 2 bis weniger als 10 (cps)mPas² beträgt.

## Revendications

1. Emulsion de polymère inverse consistant en 10 à 70% en poids d'une solution aqueuse contenant 10 à 90% en poids d'un homopolymère d'un N-vinylamide de formule:

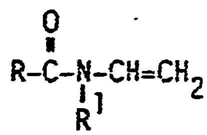

dans laquelle R et $R^1$ représentent l'hydrogène ou un groupe alcoyle en $C_1$–$C_4$, dispersé de façon colloïdale dans un liquide hydrocarboné qui est un alcane en $C_5$–$C_{10}$, ou en plus du toluène et du xylène lorsque R est alcoyle, l'homopolymère ayant un poids moléculaire moyen d'au moins $10^6$ et l'émulsion présentant une viscosité Brookfield inférieure à 10 (cps)mPas² à 60 tr/min et 15% de solides.

2. Emulsion de polymère inverse selon la revendication 1, dans laquelle R est hydrogène ou méthyle et $R^1$ est hydrogène.

3. Emulsion de polymère inverse selon la revendication 2, dans laquelle le liquide hydrocarboné est un alcane acyclique en $C_5$–$C_{10}$.

4. Emulsion de polymère inverse selon la revendication 3, dans laquelle R est hydrogène.

5. Emulsion de polymère inverse selon la revendication 4, dans laquelle l'homopolymère présente un poids moléculaire moyen de 3–15 × $10^6$.

6. Emulsion de polymère inverse selon la revendication 2, dans laquelle R est méthyle.

7. Emulsion de polymère inverse selon la revendication 3, dans laquelle R est méthyle.

8. Emulsion de polymère inverse selon la revendication 6, dans laquelle l'homopolymère présente un poids moléculaire moyen de 1,3–5 × $10^6$.

9. Emulsion de polymère inverse selon la revendication 8, dans laquelle le liquide hydrocarboné est le xylène.

10. Emulsion de polymère inverse selon la revendication 1, dans laquelle la viscosité Brookfield est de 2 à une valeur inférieure à 10 (cps)mPas².

11. Procédé pour la préparation d'une émulsion eau-dans-l'huile d'un polymère dérivé d'un monomère hydrosoluble par polymérisation inverse d'une solution aqueuse du monomère dispersé de facon colloidale dans un liquide hydrophobe en utilisant un agent tensioactif et un initiateur de radicaux libres, caractérisé par la polymérisation de 10–90% en poids, par rapport à la solution aqueuse, d'un monomère de formule:

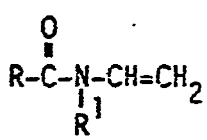

dans laquelle R et $R^1$ représentent hydrogène ou un groupe alcoyle en $C_1$–$C_4$, en utilisant 5–20% en poids, par rapport à la solution aqueuse, d'un agent tensioactif présentant une valeur d'équilibre hydrophile-lipophile de 4 à 9, un initiateur de radicaux libres de type azo et un liquide hydrocarboné qui est un alcane en $C_5$–$C_{10}$, ou également du toluène ou du xylène lorsque R est alcoyle, la solution aqueuse et le liquide hydrocarboné étant dans un rapport en poids allant de 1:2 à 2:1 et l'obtention d'une émulsion eau-dans-l'huile d'un homopolymère présentant un poids moléculaire moyen d'au moins $10^6$, l'émulsion ayant une viscosité Brookfield inférieure à 10 (cps)mPas² à 60 tr/min et 15% de solides.

12. Procédé selon la revendication 11, dans lequel R est hydrogène ou méthyle et $R^1$ est hydrogene.

13. Procédé selon la revendication 12, dans lequel le liquide hydrocarboné est un alcane acyclique en $C_5$–$C_{10}$.

14. Procedé selon la revendication 13, dans lequel R est hydrogène.

15. Procédé selon la revendication 14, dans lequel l'homopolymère présente un poids moléculaire moyen de $3–15 \times 10^6$.

16. Procédé selon la revendication 12, dans lequel R est méthyle.

17. Procédé selon la revendication 13, dans lequel R est méthyle.

18. Procédé selon la revendication 16, dans lequel l'homopolymère présente un poids moléculaire moyen de $1{,}3–5 \times 10^6$.

19. Procédé selon la revendication 18, dans lequel le liquide hydrocarboné est le xylene.

20. Procédé selon la revendication 11, dans lequel la viscosité Brookfield est de 2 à une valeur inférieure à 10 (cps)$mPas^2$.

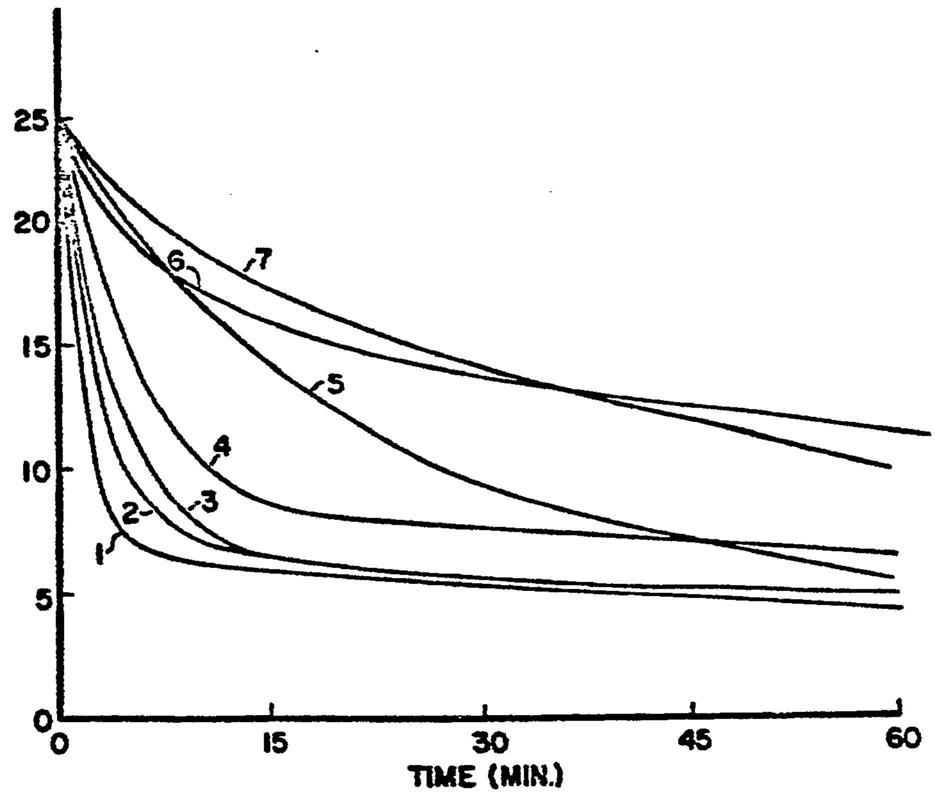


1. POLYACRYLAMIDE
2. POLY (VINYLAMINE)
3. POLYACRYLIC ACID
4. POLY (N-VINYLACETAMIDE)
5. CONTROL
6. CATIONIC GUAR
7. POLY (VINYLAMINE ·HCl)